# EUROPEAN PATENT SPECIFICATION

(11) **EP 2 917 495 B1**
(45) Date of publication and mention of the grant of the patent: **02.10.2019**
(21) Application number: 13747356.7
(22) Date of filing: 07.08.2013
(51) Int. Cl.: F01D 5/16, F01D 5/22

(54) **A BLADE CASCADE FOR A TURBOMACHINE**
SCHAUFELKASKADE FÜR EINE TURBOMASCHINE
AGENCEMENT D´AUBES DIRECTRICES POUR UNE TURBOMACHINE

(30) Priority: 10.08.2012 EP 12179979
(43) Date of publication of application: 16.09.2015
(73) Proprietor: MTU Aero Engines AG, 80995 München (DE)
(72) Inventor: FRISCHBIER, Jörg, 85221 Dachau (DE)
(86) International application number: PCT/EP2013/002362
(87) International publication number: WO 2014/023425

(56) References cited:
- EP-A1- 0 635 623
- EP-A1- 1 881 163
- EP-A1- 2 505 780
- EP-A1- 2 578 801

## Description

The present invention relates to a blade cascade, in particular a stationary or moving cascade, for a turbomachine, in particular a gas turbine, as well as a turbomachine having at least one such blade cascade.

Known blade cascades are composed of a plurality of blade arrangements, each having one or multiple blades. In order to increase the stability of such a blade cascade and/or to conduct a working fluid, it is known to place shrouds on the blade tips, i.e., radially outward on the moving blades and radially inward on the stationary blades, the shrouds of adjacent blade arrangements being in contact with each other in a clamped manner.

In particular, in the event of loss of shroud clamping, e.g., after long operation time or as a result of fault, the blades may become aeroelastically unstable and wobble, resulting in fatigue failure of the blades. This applies in particular to blades made of a titanium-aluminum alloy due to their lower material densities and specific root constructions.

It is known from GB 252,701 B1 to alternate first and second blade arrangements with shrouds, the blades of adjacent blade arrangements having different taperings and the shrouds of adjacent blade arrangements having different wall thicknesses, so that adjacent blade arrangements have different natural frequencies.

In order to represent relatively great frequency differences, the radial wall thicknesses would have to vary greatly. This, however, would result in a lateral surface of the shroud compound which varies greatly in the radial direction, thus causing dynamic and/or flow-related disadvantages. In addition, the radial wall thicknesses influence only slightly the mass moment of inertia of the shrouds with relation to the radial direction. GB 252,701 B1 does thus not take into consideration the combination of mass moment of inertia and torsional stiffness, which in particular determines the natural torsional frequencies, but instead focuses on the different stiffnesses in the circumferential direction and thus the coupling of the adjacent blade arrangements.

A blade cascade according to the definition of the species in Claim 1 is known from the applicant's own EP 2 578 801 A1 in which shrouds of different blade arrangements have different extensions in the circumferential and/or axial direction.

It is the object of the present invention to provide an improved blade cascade.

To achieve this object, a blade cascade according to the definition of the species in Claim 1 is refined by its characterizing features. Claim 6 protects a turbomachine having at least one blade cascade of this type and the subclaims relate to advantageous refinements.

A blade cascade according to the present invention has a number of first blade arrangements. The blade cascade may, in particular, be a stationary or a moving cascade of a compressor or turbine stage of a gas turbine.

The number of first blade arrangements may be one or more and have an even or uneven number of blades in one preferred refinement. The first blade arrangements each have a number of first blades and a first shroud which is fixedly, in particular integrally, connected to the first blades in one preferred refinement. Likewise, the first shroud may also be detachably connected to the first blades. The number of first blades may be one or more and have an even or uneven number of blades in one preferred refinement. On the side which is radially opposite the first shroud, the first blade(s) preferably has/have a blade platform which is fixedly, in particular integrally, connected to the blades in one preferred refinement.

A blade arrangement in the sense of the present invention is therefore in particular defined by a shroud which is connected to the blade(s) of the blade arrangement. In the present case, a blade is, in particular, understood to mean a blade having a front edge which is subjected to inflow during operation and a rear edge, as well as a suction and pressure side which connects the front and the rear edges and is used to deflect the flow. In particular on a side of the blade platform opposite the blade, a blade root may be situated for fastening, in particular on a rotor or a housing.

The shrouds of the first blade arrangements each have a first extension in the circumferential and axial direction, these first shrouds preferably being at least essentially annular.

The blade cascade has a number of second blade arrangements. This number of second blade arrangements may also be one or more and have an even or uneven number of blades in one preferred refinement.

The second blade arrangements each have a number of second blades and a second shroud which is fixedly, in particular integrally, connected to the second blades in one preferred refinement. Likewise, the second shroud may also be detachably connected to the second blades. The number of second blades may be one or more and have an even or uneven number of blades in one preferred refinement. On the side which is radially opposite the second shroud, the second blade(s) preferably has/have a blade platform which is fixedly, in particular integrally, connected to the blades in one preferred refinement. A second blade arrangement preferably corresponds to a first blade arrangement, except for the differences explained in the following.

The extension in the circumferential and/or axial direction of the second shrouds, which are preferably also annular, at least essentially, is larger than the extension of the first shrouds in this direction. In particular, the second shrouds may have larger overhangs in the circumferential direction than the first shrouds. Additionally or alternatively, the second shrouds may protrude in the axial direction beyond the edges of the first shrouds on one or both sides.

According to the present invention, one or more, preferably all, first blades of one or more, preferably all, first blade arrangements are additionally designed to be stiffer torsionally than one or more, preferably all, second blades of one or more, preferably all, second blade arrangements. A first blade is in particular stiffer torsionally than a second blade in the sense of the present invention if it shows little torsion or twisting when it is acted on by the same torque in the radial direction or about its thread axis, or, in other words, when it produces a greater torsion resistance when subjected to a torsion about the radial direction or its thread axis.

Since a torsion frequency is in particular a function of the quotient of torsion stiffness and moment of inertia, it is in particular possible for a natural torsional frequency of the first blade arrangements to be placed farther away from a natural torsional frequency of the second blade arrangements, in which the second blades, which in turn are less stiff torsionally, are combined with the second shrouds, which are larger in the circumferential and/or axial direction, or with accordingly greater mass moments of inertia, by combining according to the present invention the first blades, which are stiffer torsionally, and the first shrouds, which are shorter in the circumferential and/or axial direction and which decisively determine their mass moment of inertia with regard to the radial direction. Additionally or alternatively, other natural frequencies, in particular bending and/or coupling natural frequencies, may be determined in this way.

In one embodiment, the extension in the radial direction of the first shrouds may additionally differ from the extension in the radial direction of the second shrouds, in particular be smaller than the extension in the radial direction of the second shrouds. In another embodiment, a radially constant or annular outer lateral surface may be provided in a moving cascade, and a radially constant or annular inner lateral surface may be provided in a stationary cascade.

In addition to a second blade arrangement whose second shrouds have larger extensions than the first shrouds of the first blade arrangements and whose second blades are designed to be less stiff torsionally, at least partially, than the first blades, the blade cascade may have one or multiple other blade arrangements whose other shrouds have an extension in the circumferential, axial, and/or radial direction which differs from the corresponding extension of the first and/or the second blade arrangements and/or whose blades are designed to be stiffer or less stiff torsionally than the first and/or the second blades. In particular, a number of first blade arrangements, an identical or a different number of second blade arrangements, and preferably an identical or a different number of other, third blade arrangements may be provided. In addition, an identical or a different number of other, different fourth blade arrangements may be provided, an identical or a different number of other, different fifth blade arrangements may be provided, etc. Here, extensions of shrouds in the circumferential, axial, and/or radial direction and/or torsional stiffnesses of other or different blade arrangements may differ from one another and/or from the extensions of the first and/or second blade arrangements. In another embodiment, the blade cascade in contrast includes first and second blade arrangements or has only two different blade arrangements.

The torsional stiffness of a blade is in particular a function of its material. In one embodiment, blades which are stiffer torsionally are accordingly made of a material having greater shear modulus (G [N/m²]) than blades which are less stiff torsionally. In one refinement, the shear modulus of one or multiple, preferably all, in particular first, blades which are stiffer torsionally is greater by at least 10%, in particular by at least 15%, and preferably by at least 20% than the shear modulus of one or multiple, preferably all, in particular second, blades which are less stiff torsionally. In one embodiment, one or multiple, preferably all, blades of the blade cascade are made of one or different titanium-aluminum alloys.

The torsional stiffness of a blade is furthermore a function in particular of its geometry, in particular its (polar) geometrical moment of inertia. In one embodiment, blades which are stiffer torsionally may accordingly have sectionally or over their entire height a greater (polar) geometrical moment of inertia than blades which are less stiff torsionally. Since the blade profiles must in particular comply with aerodynamic requirements, their geometrical moment of inertia, in particular in the case of congruent or contour-like blade profiles, may in particular be influenced by the predefined maximum profile thickness. In one embodiment, the blades which are stiffer torsionally accordingly have a greater maximum profile thickness than blades which are less stiff torsionally, in one advantageous refinement a maximum profile thickness of one or multiple, preferably all, in particular first, blades which are stiffer torsionally is greater by at least 10%, in particular by at least 15%, and preferably by at least 20%, than a maximum profile thickness of one or multiple, preferably all, in particular second, blades which are less stiff torsionally.

A maximum profile thickness in the sense of the present invention may, in particular, be the maximum wall thickness of a blade at a radial height or a profile cross section, the wall thickness of a front edge being variable over the maximum wall thickness toward a rear edge. Similarly, a maximum profile thickness in the sense of the present invention may in particular be the entire maximum wall thickness of the blade over its entire height or for all profile cross sections. In one embodiment, the first blades which are stiffer torsionally accordingly have a greater maximum profile thickness at at least one radial height than the second blades at the same height which are less stiff torsionally, in one advantageous refinement such a maximum profile thickness of one or multiple, preferably all, first blades, which are stiffer torsionally, being greater by at least 10%, in particular by at least 15%, and preferably by at least 20%, than such a maximum profile thickness of one or multiple, preferably all, second blades, which are less stiff torsionally. In one embodiment, the first blades which are stiffer torsionally additionally or alternatively have a greater (absolute) maximum profile thickness, viewed overall or over their overall height, than the second blades at the same height which are less stiff torsionally, in one advantageous refinement such a maximum profile thickness of one or multiple, preferably all, first blades, which are stiffer torsionally, being greater by at least 10%, in particular by at least 15%, and preferably by at least 20%, than such a maximum profile thickness of one or multiple, preferably all, second blades, which are less stiff torsionally. In other words, a maximum value of all wall thicknesses of a first blade, which is stiffer torsionally, is greater in one embodiment than a maximum value of all wall thicknesses of a second blade, which is less stiff torsionally, in particular by at least 10%, in particular by at least 15%, and preferably by at least 20%.

In one embodiment, the shrouds of one or multiple, preferably all, blade arrangements are symmetric to the blades of this blade arrangement in the circumferential and/or axial direction. A symmetry in the axial direction is in particular understood to mean that the shrouds or blades overhang on both sides in the axial direction by the same absolute value, and a symmetry in the circumferential direction is accordingly understood to mean that the shrouds or blades overhang in the circumferential direction by the same absolute value. Likewise, the shrouds of one or multiple, preferably all, blade arrangements may also be symmetric to the blades of this blade arrangement in the circumferential and/or axial direction. In particular, shrouds may be offset in relation to the blades of the blade arrangements in the circumferential and/or axial direction or overhang on both sides of the blade arrangement by different absolute values.

In one embodiment, two or more, in particular all, blade arrangements have the same number of blades and in one preferred refinement, they have exactly one blade each. As explained above, a second and/or another (different) blade arrangement preferably corresponds to the first blade arrangement, except for the extension of the shrouds.

In one embodiment, the first and the second, and possibly other, blade arrangements are distributed cyclically over the circumference. If the blade cascade has a number of first and only one number of second blade arrangements, these are then distributed alternatingly over the circumference. If the blade cascade has a number of first, a number of second, and a number of other, third blade arrangements, these may be distributed over the circumference in the case of a cyclic distribution approximately in the following sequence: first blade arrangement - second blade arrangement - third blade arrangement - first blade arrangement or in the following sequence: first blade arrangement - second blade arrangement - first blade arrangement - third blade arrangement - first blade arrangement.

In one embodiment, shrouds of adjacent blade arrangements have complementary, in particular non-flat, contact surfaces which face one another. The contact surfaces may, in particular, have the shape of a wave. Due to the fact that different shrouds are designed differently, a predefined distribution of the blade arrangements may be ensured during assembly.

In one preferred embodiment, shrouds of at least one blade arrangement have one or multiple recesses or pockets, the shrouds of at least one other blade arrangement not having any recess. Additionally or alternatively, shrouds of at least one other blade arrangement may have a different number, configuration and/or shape of recesses. In this way, natural frequencies of the blade arrangements may be additionally interfered with.

Other features and advantages result from the subclaims and the exemplary embodiments.

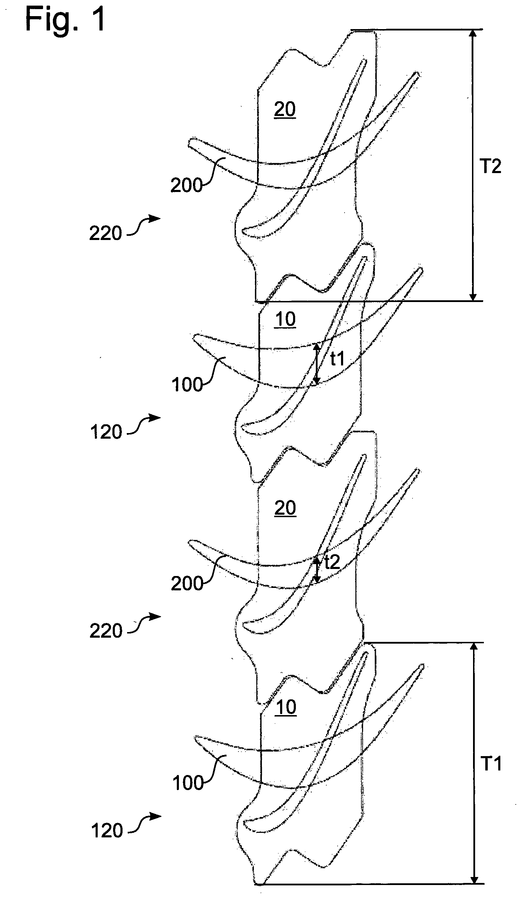

Figure 1 partially schematically shows an angled section of a part of a blade cascade according to one embodiment of the present invention.

Figure 1 shows an angled section of a part of a moving cascade of a turbine according to one embodiment of the present invention. The moving cascade is alternatingly composed of first blade arrangements 120 and second blade arrangements 220. Each blade arrangement has a blade platform, moving blades 100 and 200 which are integrally connected to their respective blade platforms and shrouds 10 and 20 which are integrally connected to their respective moving blades. Adjacent shrouds 10, 20 have complementary, wave-shaped contact surfaces which face one another.

First shrouds 10 of first blade arrangements 120 each having one blade 100 have in the circumferential direction (vertical in Figure 1) a first extension T1 and are situated symmetrically to blades 100 in the circumferential and axial direction (horizontal in Figure 1), i.e., they have the same overhang or negative overlap or set-off.

Second shrouds 20 of second blade arrangements 220 are also situated symmetrically to blades 200 in the circumferential and axial direction and have a second extension T2 in the circumferential direction which is larger than extension T1. In the axial and radial direction, shrouds 10, 20, however, each have the same extension, so that on the one hand, a homogeneous, annular lateral surface of the shroud compound is achieved, and on the other hand, an interference with the natural frequencies of adjacent blade arrangements 120, 220 is acheived.

At the radial height of the angled section of Figure 1, the first blades have a greater maximum profile thickness t1 than the second blades which have a smaller maximum profile thickness t2 at this radial height. Since the blades have their maximum wall thickness overall at this radial height, the first blades thus also have a greater profile thickness overall, i.e., with reference to their entire blade height, than the second blades. In other words, t1, t2 represent maximum values both in the radial direction (perpendicular on the drawing plane of Figure 1) and in the axial or flow-through direction (from left to right in Figure 1). In this way, the first blades are designed to be stiffer torsionally than the second blades which are manufactured from a titanium-aluminum alloy just as the first blades.

Due to larger extension T2 in the circumferential direction, the second shrouds of the second blade arrangements have a greater mass moment of inertia about the radial direction (perpendicular on drawing plane of Figure 1) than the first shrouds of the first blade arrangements. On the other side, the first blades are designed to be stiffer torsionally than the second blades. Due to this combination, it is advantageously possible, in particular, to space apart the torsion frequencies of the first and the second blade arrangements.

### List of Reference Numerals

- 10: first shroud
- 20: second shroud
- 100: first moving blade
- 200: second moving blade
- 120: first blade arrangement
- 220: second blade arrangement

## Claims

1. A blade cascade for a turbomachine, in particular a gas turbine, having a number of first blade arrangements (120), each having at least one first blade (100) and one first shroud (10) having a first extension (T1) in the circumferential and/or axial direction, and each having a number of second blade arrangements (220), each having at least one second blade (200) and one second shroud (20) having a second extension (T2) in the same direction which is larger than the first extension,
**characterized in that** at least one of the first blades is designed to be stiffer torsionally than at least one of the second blades.

2. The blade cascade as recited in the preceding claim,
**characterized in that** a first blade which is stiffer torsionally has a greater maximum profile thickness and/or is made of a material having a greater shear modulus than a second blade which is less stiff torsionally.

3. The blade cascade as recited in the preceding claim,
**characterized in that** a maximum profile thickness (t1) of a first blade which is stiffer torsionally is greater than a maximum profile thickness (t2) of a second blade which is less stiff torsionally by at least 10%, in particular by at least 15%, and preferably by at least 20%, and/or the shear modulus of a first blade which is stiffer torsionally is greater than a shear modulus of a second blade which is less stiff torsionally by at least 10%, in particular by at least 15%, and preferably by at least 20%.

4. The blade cascade as recited in one of the preceding claims,
**characterized in that** at least two, in particular all, blade arrangements have the same number of blades, in particular exactly one blade.

5. The blade cascade as recited in one of the preceding claims,
**characterized in that** the first and the second blade arrangements are distributed cyclically over the circumference.

6. A turbomachine, in particular a gas turbine, having at least one moving and/or stationary cascade as recited in one of the preceding claims.

## Patentansprüche

1. Schaufelgitter für eine Turbomaschine, insbesondere eine Gasturbine, die eine Anzahl von ersten Schaufelanordnungen (120) aufweist, wobei jede mindestens eine erste Schaufel (100) und eine erste Ummantelung (10) mit einer ersten Verlängerung (T1) in Umfangs- und/oder Axialrichtung umfasst, und jede eine Anzahl von zweiten Schaufelanordnungen (220) aufweist, wobei jede mindestens eine zweite Schaufel (200) und eine zweite Ummantelung (20) mit einer zweiten Verlängerung (T2) in derselben Richtung umfasst, die größer als die erste Verlängerung ist, **dadurch gekennzeichnet, dass** mindestens eine der ersten Schaufeln torsionssteifer als mindestens eine der zweiten Schaufeln ausgebildet ist.

2. Schaufelgitter nach dem vorhergehenden Anspruch, **dadurch gekennzeichnet, dass** eine erste Schaufel, die torsionssteifer ist, eine größere maximale Profildicke aufweist und/oder aus einem Material mit einem größeren Schubmodul als eine zweite Schaufel besteht, die weniger torsionssteif ist.

3. Schaufelgitter nach dem vorhergehenden Anspruch, **dadurch gekennzeichnet, dass** eine maximale Profildicke (t1) einer ersten Schaufel, die torsionssteifer ist, größer als eine maximale Profildicke (t2) einer zweiten Schaufel ist, die weniger torsionssteif ist, um mindestens 10 %, insbesondere um mindestens 15 % und vorzugsweise um mindestens 20 %, und/oder das Schubmodul einer ersten Schaufel, die torsionssteifer ist, größer als ein Schubmodul einer zweiten Schaufel ist, die weniger torsionssteif ist, um mindestens 10 %, insbesondere um mindestens 15 % und vorzugsweise um mindestens 20 %.

4. Schaufelgitter nach einem der vorhergehenden Ansprüche, **dadurch gekennzeichnet, dass** mindestens zwei, insbesondere alle Schaufelanordnungen dieselbe Anzahl von Schaufeln aufweisen, insbesondere genau eine Schaufel.

5. Schaufelgitter nach einem der vorhergehenden Ansprüche, **dadurch gekennzeichnet, dass** die erste und die zweite Schaufelanordnung zyklisch über den Umfang verteilt sind.

6. Turbomaschine, insbesondere eine Gasturbine, die mindestens ein sich bewegendes und/oder stationäres Gitter nach einem der vorhergehenden Ansprüche umfasst.

## Revendications

1. Grille d'aubes destinée à une turbomachine, en particulier une turbine à gaz, comportant un certain nombre de premiers agencements d'aubes (120), comportant chacun au moins une première aube (100) et un premier carénage (10) ayant une première extension (T1) dans la direction circonférentielle et/ou axiale, et comportant chacun un certain nombre de seconds agencements d'aubes (220), comportant chacun au moins une seconde aube (200) et un second carénage (20) ayant, dans la même direction, une seconde extension (T2) plus importante que la première extension, **caractérisée en ce qu'**au moins une des premières aubes est conçue pour être plus rigide en torsion qu'au moins une des secondes aubes.

2. Grille d'aubes selon la revendication précédente, **caractérisée en ce que** une première aube plus rigide en torsion a une plus grande épaisseur de profil maximale et/ou est faite d'un matériau dont le module de cisaillement est plus élevé qu'une seconde aube qui est moins rigide en torsion.

3. Grille d'aubes selon la revendication précédente, **caractérisée en ce que** une épaisseur de profil maximale (t1) d'une première aube qui est plus rigide en torsion est supérieure à l'épaisseur de profil maximale (t2) d'une seconde aube qui est moins rigide en torsion, et ce d'au moins 10 %, notamment d'au moins 15 %, et de préférence d'au moins 20 % et/ou le module de cisaillement d'une première aube qui est plus rigide en torsion est supérieur d'au moins 10 %, notamment d'au moins 15 %, et de préférence d'au moins 20 %, à celui d'une seconde aube qui est moins rigide en torsion.

4. Grille d'aubes selon l'une des revendications précédentes, **caractérisée en ce que** au moins deux agencements d'aubes, en particulier tous les agencements d'aubes ont le même nombre d'aubes, en particulier exactement une aube.

5. Grille d'aubes selon l'une des revendications précédentes, **caractérisée en ce que** les premier et second agencements d'aube sont répartis de manière cyclique sur la circonférence.

6. Turbomachine, en particulier turbine à gaz, comportant au moins une grille d'aubes mobile et/ou fixe telle que décrite dans l'une des revendications précédentes.
